# EUROPEAN PATENT APPLICATION

(11) **EP 4 597 436 A1**
(43) Date of publication of application: **06.08.2025**
(21) Application number: 23871536.1
(22) Date of filing: 16.08.2023
(51) Int. Cl.: G06T 19/00

(54) **CONTENT CORRECTION DEVICE AND CONTENT CORRECTION METHOD**

(30) Priority: 29.09.2022 JP 2022156959
(71) Applicant: Hitachi Systems, Ltd., Tokyo 141-8672 (JP)
(72) Inventor: FUJIWARA, Takayuki, Tokyo 100-8280 (JP); KATSUMATA, Daisuke, Tokyo 141-8672 (JP); KABATA, Ryoichi, Tokyo 141-8672 (JP); NARITA, Yoshihito, Tokyo 141-8672 (JP); KIKUCHI, Katsuro, Tokyo 141-8672 (JP)
(74) Representative: MERH-IP Matias Erny Reichl Hoffmann Patentanwälte PartG mbB
(86) International application number: PCT/JP2023/029578
(87) International publication number: WO 2024/070294

(57) **Abstract**

A content correction device 100 includes a storage unit 101 that holds 3DCG data of an object included in a content to be displayed in a two-dimensional environment, a measurement unit 1021 that calculates an actual size of the object, a processing unit 1022 that analyzes a viewpoint movement process performed during display of the content, and a generation unit 1023 that converts the content into a VR content. When the actual size of the object is larger than a body size of a user in the content storing information in advance, the generation unit 1023 arranges the 3DCG data of the object on a rotation operation table that is an object in the VR content.

## Description

### Technical Field

The present invention relates to a content correction device and a content correction method.

### Background Art

### Cross-Reference to Related Application

The present application claims the priority of Japanese Patent Application No. 2022-156959 filed on September 29, 2022, the entire contents of which are incorporated herein by reference.

In the fields of operation, assembly, disassembly, inspection, and the like of various objects such as various devices and structures, a simulation learning technique using 3DCG has been evolved. By appropriately using the learning content based on the technique, the user can easily understand a wide variety of procedures, notes, and the like without actually holding the target device or the like.

As a technique according to the related art related to such a content, a technique for a management system that facilitates creation of a VR content (see PTL 1) and the like are proposed.

This technique relates to a VR content management system including: a server that converts object data having a specific format into object data having a common format different from the specific format and manages VR (Virtual Reality) content including the object data having the common format and a setting file in which a state of the object data having the common format in a virtual space is stored; an object creation device that creates the object data having the specific format and uploads the object data to the server; a content creation device that creates a VR content including the object data having the common format downloaded from the server and the setting file in which a state of the object data in the virtual space is stored and uploads the setting file to the server; and a viewing device that causes a viewer to experience immersion in the VR content as a viewing target that has been downloaded from the server.

A system, a method, and a device for sharing and displaying 2D and 3D contents have also been proposed (see PTL 2) .

This technique relates to a non-transitory computer-readable storage medium that stores a program instruction that is computer-executable to perform operations. The operations include: acquiring a two-dimensional (2D) content that is referred to by a content item to be displayed on a display of a first device through an application; detecting that the content item refers to a three-dimensional (3D) content associated with the 2D content; detecting that a second device communicates with the first device, the second device being capable of displaying the 3D content referred to by the content item, and identifying the 3D content referred to by the content item to the second device.

### Citation List

### Patent Literature

PTL 1: JP2019-168934A
PTL 2: JP2020-074058A

### Summary of Invention

### Technical Problem

The 2D-based content based on the above-described 3DCG technology is surely useful. However, depending on the actual size of a learning target and the characteristics of the surrounding environment, a content, which is intended for playing and viewing on a 2D screen on a PC or tablet device, may lead to a poor sense of immersion and a poor sense of reality, and an expected learning effect may not be obtained.

Therefore, in order to perform realistic learning with a greater sense of immersion, when the above-described 2D-based content is used as the VR (Virtual Reality) content, a more preferable learning effect can be expected at low cost.

However, the 2D-based content and the VR content have different GUI expression methods, and when the 2D-based content is applied to the VR content as it is, a large problem is likely to occur from the viewpoint of usability.

Specifically, on the 2D-based content, there is a case where GUI control is performed to automatically move the viewpoint when the viewpoint reaches a specific area so that an area adjacent to that area or an area in the depth direction can be viewed.

However, when this control is performed in the same manner as in the VR content, it is unusual from a normal behavior of a person, and thus so-called VR sickness is likely to occur for the user.

The specific background to the occurrence of the above-described VR sickness is that in the VR content, which gives a life-size, first-person viewing experience, even though the user's own body is stationary, only the field of view in front of the user's eyes moves rapidly within the VR content, resulting in "illusions of self-motion".

On the other hand, even if a uniform correction or the like was performed on all objects in the 2D-based content to make all the objects VR-compatible in order to prevent such VR sickness, there are limitations in terms of cost and effort.

Accordingly, an object of the invention is to provide a technique of avoiding VR sickness and reducing cost when a 2D-based content is converted into a VR content.

### Solution to Problem

According to an aspect of the invention to solve the problems, there is provided a content correction device including: a storage unit configured to hold 3DCG data of an object included in a content to be displayed in a two-dimensional environment; a measurement unit configured to calculate an actual size of the object based on the 3DCG data; a processing unit configured to analyze a viewpoint movement process performed during display of the content; and a generation unit configured to convert the content into a VR content, in which when the actual size of the object calculated by the measurement unit is larger than a body size of a user in the content holding information in advance, the generation unit arranges the 3DCG data of the object on a rotation operation table that is an object in the VR content.

According to another aspect of the invention, there is provided a content correction method which is performed by an information processing device including a storage unit configured to hold 3DCG data of an object included in a content to be displayed in a two-dimensional environment, a measurement unit configured to calculate an actual size of the object based on the 3DCG data, a processing unit configured to analyze a viewpoint movement process performed during display of the content, and a generation unit configured to convert the content into a VR content. The method includes arranging, by the generation unit, the 3DCG data of the object on a rotation operation table that is an object in the VR content when the actual size of the object calculated by the measurement unit is larger than a body size of a user in the content holding information in advance.

### Advantageous Effects of Invention

According to the invention, it is possible to avoid VR sickness and reduce cost when a 2D-based content is converted into a VR content.

### Brief Description of Drawings

[FIG. 1] FIG. 1 is a diagram showing a network configuration including a content correction device according to the present embodiment.
[FIG. 2] FIG. 2 is a diagram showing a hardware structure example of the content correction device according to the present embodiment.
[FIG. 3] FIG. 3 is a diagram showing a flow example of a content correction method according to the present embodiment.
[FIG. 4] FIG. 4 is a diagram showing a screen example according to the present embodiment.
[FIG. 5] FIG. 5 is a diagram showing a screen example according to the present embodiment.
[FIG. 6] FIG. 6 is a diagram showing a screen example according to the present embodiment.
[FIG. 7] FIG. 7 is a diagram showing a screen example according to the present embodiment.
[FIG. 8] FIG. 8 is a diagram showing a flow example of the content correction method according to the present embodiment.

### Description of Embodiments

### <Network Configuration>

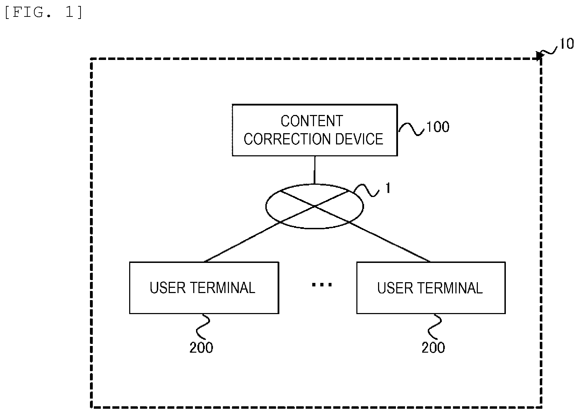

Hereinafter, an embodiment of the invention will be described in detail with reference to the drawings. FIG. 1 is a diagram showing a network configuration including a content correction device 100 according to the present embodiment. The content correction device 100 shown in FIG. 1 is a computer for avoiding virtual reality (VR) sickness and reducing cost when 2D-based contents are converted into VR contents.

As shown in FIG. 1, the content correction device 100 according to the present embodiment is communicably connected to user terminals 200 or the like via an appropriate network 1 such as the Internet or a local area network (LAN). Accordingly, the content correction device 100 and the user terminals 200 may be collectively referred to as a content correction system 10.

The content correction device 100 according to the present embodiment can be said to be a service provider for converting and playing a 2D-based content, which is prepared assuming playing and output on a 2D screen, such as a display of a tablet terminal or a general personal computer (PC), into a virtual reality (VR) content.

On the other hand, the user terminal 200 is a terminal serving as a playing destination of the above-described VR contents. The user terminal 200 is a training content playing device for performing training such as an operation and is a playing destination of VR contents converted and generated from the 2D-based contents by the content correction device 100 according to the present embodiment. Specifically, a device for viewing VR contents (so-called VR glasses or the like) is assumed.

### <Hardware Structure>

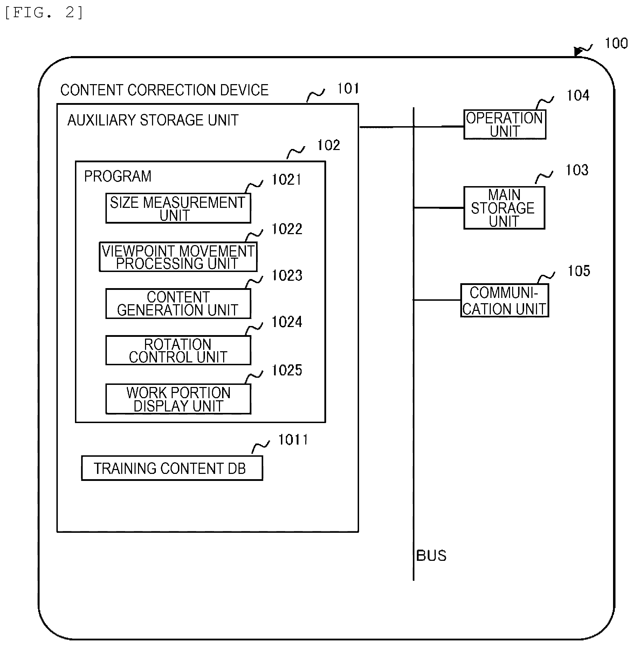

A hardware structure of the content correction device 100 according to the present embodiment is as follows in FIG. 2.

That is, the content correction device 100 includes an auxiliary storage unit 101, a main storage unit 103, an operation unit 104, and a communication unit 105.

The auxiliary storage unit 101 is a storage device implemented by an appropriate nonvolatile storage element such as a solid state drive (SSD) or a hard disk drive.

The main storage unit 103 is a storage device implemented by a volatile storage element such as a random access memory (RAM).

The operation unit 104 is a central processing unit (CPU) that reads, into the main storage unit 103, a program 102 held in the auxiliary storage unit 101, executes the program 102, and performs overall control of the device itself as well as various determinations, operations, and control processes.

The communication unit 105 is assumed to be a network interface card or the like that is connected to the above-described network 1 and performs a communication process with the user terminal 200.

When the content correction device 100 is a stand-alone machine, it is preferable that the content correction device 100 further includes an input device that receives key input and voice input from a user, and an output device such as a display that displays processed data.

The auxiliary storage unit 101 stores a training content DB 1011 in addition to the program 102 for implementing necessary functions as the content correction device according to the present embodiment. The training content DB 1011 is a database that stores 2D-based contents to be played and displayed on a display of a tablet terminal or the like.

The contents are, for example, contents for operation training of various devices, and are contents for a user to observe and operate the devices in a virtual space. Originally, the contents are 2D-based contents as described above, and are not VR contents. A content generation unit 1023 of the content correction device 100 according to the present embodiment converts the 2D-based contents into VR contents based on 3DCG data in response to an instruction from the user terminal 200.

The program 102 is a program for implementing functions of the content correction device according to the invention, and includes, in advance, programs corresponding to the respective functions of a size measurement unit 1021, a viewpoint movement processing unit 1022, a content generation unit 1023, a rotation control unit 1024, and a work portion display unit 1025 as shown in FIG. 2.

### <Flow Example>

Hereinafter, an actual procedure of a content correction method according to the present embodiment will be described with reference to the drawings. Various operations corresponding to the content correction method described below are implemented by a program that is read by the content correction device 100 into a memory or the like and executed. The program is made up of codes for executing various operations to be described below.

As described above, in the content correction method according to the present embodiment, the viewpoint movement is efficiently corrected in order to view a 3DCG-based training content created for playing on a 2D screen, such as a PC display or a tablet terminal, with a virtual reality (VR) compatible headset without an excessive feeling of discomfort (without occurrence of VR sickness).

When the VR content is developed with scratches without selecting such a correction method, considerable cost and labor are required, and it is difficult to say that the solution is an optimal solution in a situation where an existing training content exists. Therefore, according to the content correction method of the present embodiment, when training contents using 3DCG can be appropriately modified and played as VR contents, an excellent improvement effect in both labor and cost can be expected.

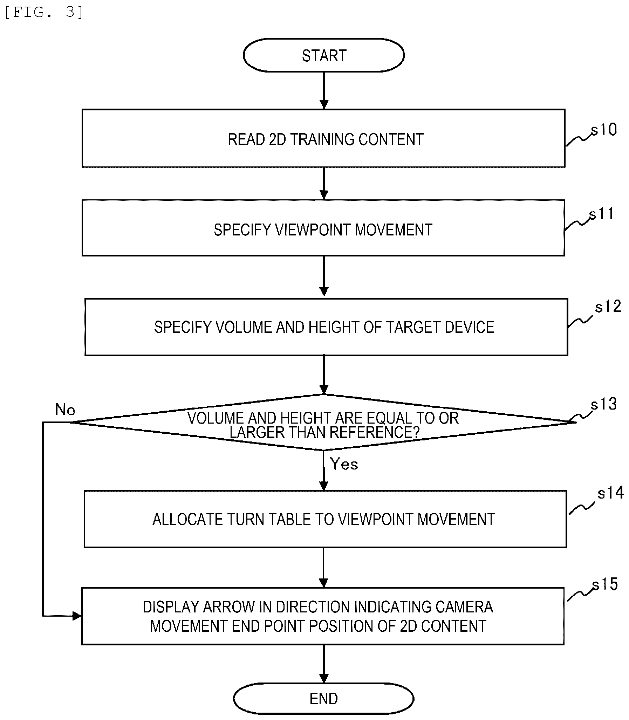

Here, a flow example of the content correction method according to the present embodiment based on FIG. 3 will be described. In this case, the content generation unit 1023 of the content correction device 100 reads, for example, a training content according to an instruction from the user terminal 200 from the training content DB 1011 of the auxiliary storage unit 101 into the main storage unit 103 (s10). Here, the training content to be read includes 3DCG data to be displayed on a 2D screen such as a normal display.

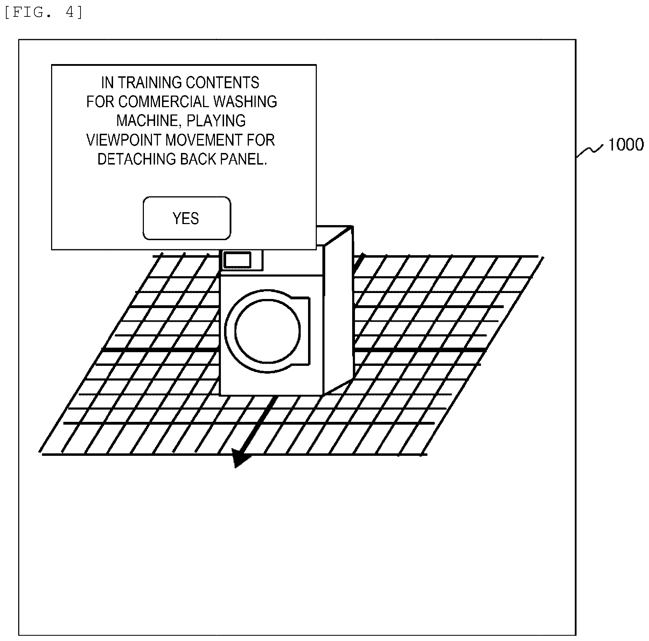

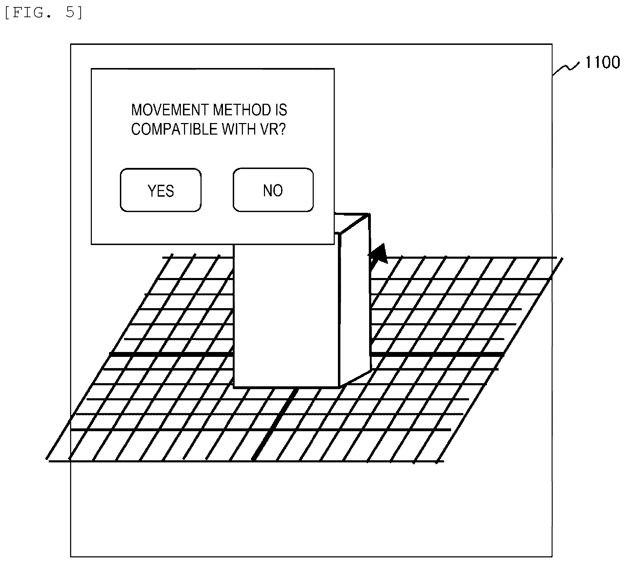

Here, the content generation unit 1023 of the content correction device 100 plays the 3DCG data of the training content read in above-described s10, outputs the 3DCG data to the user terminal 200 which is VR glasses, and receives an operation instruction from the user terminal 200 (see FIGS. 4 and 5).

The mechanism of the operation instruction here is the same as that in the existing VR glasses, and the viewpoint of the user wearing the user terminal 200, the movement of the viewpoint (or eyeballs), and the event of blinking are observed as the operation instruction, and the observation value is fed back from the user terminal 200 as the VR glasses to the content playing control or the like in the content correction device 100.

The viewpoint movement processing unit 1022 of the content correction device 100 acquires the specified observation value of the viewpoint movement from the user terminal 200 in relation to an object corresponding to a device to be trained (hereinafter, a target device) in the above-described training content displayed in the user terminal 200 (s11).

The target viewpoint movement in this case does not correspond to any viewpoint movement, and for example, the target viewpoint movement is a movement relating to a portion and a timing at which the viewpoint is to be moved to the next training motion position among the portions of the target device described above.

For example, when a certain user performs a predetermined training motion while observing a portion A of the target device and the training motion is completed, the viewpoint movement processing unit 1022 of the content correction device 100 senses that a position and a timing at which the viewpoint is to be moved to a portion B (for example, a portion which is in a blind spot from the portion A) that is a target of the next training motion have arrived.

Naturally, it is assumed that the content correction device 100 holds and recognizes information in advance regarding the procedure, the target, and the timing of the training motion in the above-described content.

Subsequently, the size measurement unit 1021 of the content correction device 100 calculates the volume and the height as an actual size of the above-described object, that is, the target device based on the 3DCG data in the training content (s12).

In this calculation, for example, the volume and height of the object formed by connecting the vertices indicated by the 3DCG data of the target device, and the volume and height of a bounding box (a rectangular parallelepiped surrounding the entire object) are calculated.

The rotation control unit 1024 of the content correction device 100 determines whether the result of the above-described calculation in s12, that is, the volume and the height of the target device is equal to or larger than a predetermined reference (s13). The reference is assumed to be a value of a standard volume or a standard height of a person. The content correction device 100 holds such reference values in the auxiliary storage unit 101.

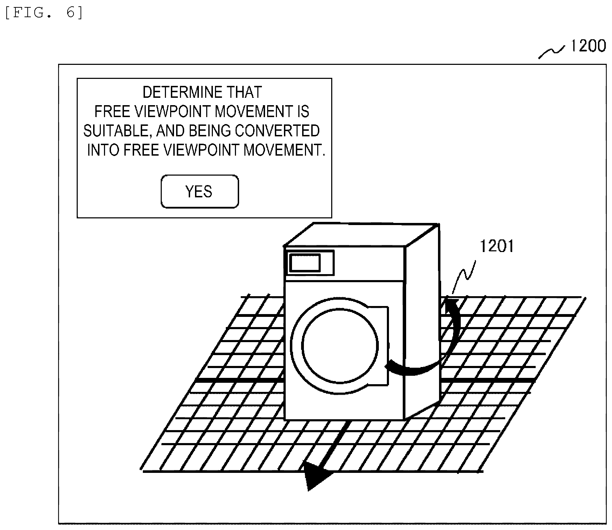

As a result of the determination, if the actual size of the target device is not equal to or larger than the reference (s13: No), the work portion display unit 1025 of the content correction device 100 displays an arrow object 1201, for example, as shown in FIG. 6 in a direction indicating a target portion of the next training motion as described above without performing a special viewpoint movement process (s15), and receives an operation event from the user. The operation event here relates to an operation associated with the next training motion when the user moves around the object in the virtual space according to the arrow.

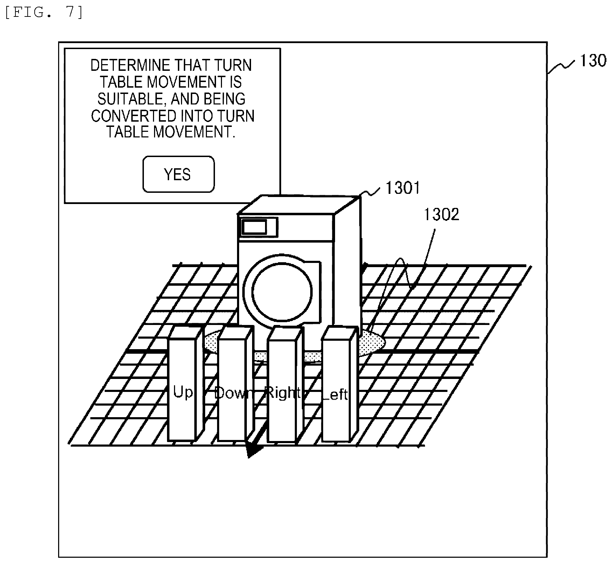

On the other hand, as a result of the above-described determination, if the actual size of the target device is equal to or larger than the reference (s13: Yes), the rotation control unit 1024 of the content correction device 100 places an object 1301 as the target device on an object 1302 which is an object for VR and indicates the turn table for the rotation operation, and displays the object 1301 on the user terminal 200 as shown in FIG. 7 (s14). That is, the user views the target device placed on a turn table in the virtual space with VR glasses or the like.

The work portion display unit 1025 of the content correction device 100 displays, for example, an arrow object in the direction indicating the target portion of the next training motion (s15) together with the execution in above-described s14, and receives an operation event from the user.

The operation event here relates to an operation of rotating the turn table in a direction of the above-described arrow, and a predetermined training motion performed on an object subjected to such rotation.

After the execution in above-described s15, the content correction device 100 receives an instruction to end the training motion from the user terminal 200 and ends this flow.

It is preferable that the content correction device 100 stores and holds a history of VR conversion of the 2D-based training content in the auxiliary storage unit 101 in association with the type, characteristics, and the like of the object.

In this case, in the subsequent VR conversion, when the target device in the 2D content that is the target of the VR conversion in the past is similar to the current target device (for example, the type of the device is a server device), the selection control of the viewpoint movement process (whether the object is arranged on the turn table or only the arrow object is arranged) is selected in the same manner as the past case, and the process is automated.

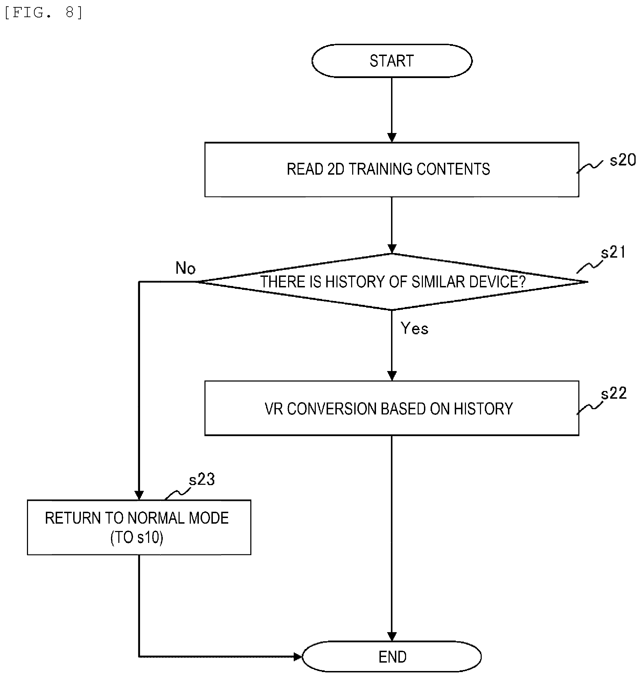

An example of the flow in this case is shown in FIG. 8. Here, the content correction device 100 reads a (new) 2D training content which is not subjected to VR conversion from the training content DB 1011 of the auxiliary storage unit 101 (s20), and determines whether the target device has a history similar to the training content (s21).

As a result of the above-described determination, if there is no history related to the similar device (s21: No), the content correction device 100 ends the process (s23).

On the other hand, as a result of the above-described determination, if there is a history related to the similar device (s21: Yes), the content correction device 100 executes VR conversion based on the corresponding history among the histories in the auxiliary storage unit 101 (s22) and ends the process.

Although the best mode for carrying out the invention has been specifically described above, the invention is not limited to the best mode, and various modifications can be made without departing from the gist of the invention.

According to the present embodiment, it is possible to avoid VR sickness and reduce cost when a 2D-based content is converted into a VR content.

From the description of this description, at least the following is clarified. That is, in the content correction device according to the present embodiment, when the actual size of the object is larger than the body size, the generation unit may arrange the 3DCG data of the object in the VR content on the table, and display a predetermined object indicating a direction of a predetermined next work target portion.

According to this, it is possible for the user himself/herself to control the viewpoint from the user with respect to the object (device or the like) to be operated by the user, and VR sickness can be avoided. Next, the direction in which the viewpoint is to be directed is accurately approved, and the next operation is performed.

Further, in the content correction device according to the present embodiment, when the actual size of the object is smaller than the body size, the generation unit may display a predetermined object, which indicates a direction of a predetermined next work target portion, without adding viewpoint movement related to the object in the VR content.

According to this, under a condition in which VR sickness of the user is less likely to occur, it is possible to avoid the control to enable the turn table operation and improve the overall processing efficiency.

In the content correction method according to the present embodiment, when the actual size of the object is larger than the body size, the generation unit of the information processing device may arrange the 3DCG data of the object in the VR content on the table, and display a predetermined object indicating a direction of a predetermined next work target portion.

In the content correction method according to the present embodiment, when the actual size of the object is smaller than the body size, the generation unit of the information processing device may display a predetermined object, which indicates a direction of a predetermined next work target portion, without adding viewpoint movement related to the object in the VR content.

### Reference Signs List

10: content correction system
100: content correction device
101: auxiliary storage unit
1011: training content DB
102: program
1021: size measurement unit (measurement unit)
1022: viewpoint movement processing unit (processing unit)
1023: content generation unit (generation unit)
1024: rotation control unit
1025: work portion display unit
103: main storage unit
104: operation unit
105: communication unit
200: user terminal

## Claims

1. A content correction device comprising:
a storage unit configured to hold 3DCG data of an object included in a content to be displayed in a two-dimensional environment;
a measurement unit configured to calculate an actual size of the object based on the 3DCG data;
a processing unit configured to analyze a viewpoint movement process performed during display of the content; and
a generation unit configured to convert the content into a VR content, wherein
when the actual size of the object calculated by the measurement unit is larger than a body size of a user in the content holding information in advance, the generation unit arranges the 3DCG data of the object on a rotation operation table that is an object in the VR content.

2. The content correction device according to claim 1, wherein
when the actual size of the object is larger than the body size, the generation unit arranges the 3DCG data of the object on the table in the VR content, and displays a predetermined object indicating a direction of a predetermined next work target portion.

3. The content correction device according to claim 1, wherein
when the actual size of the object is smaller than the body size, the generation unit displays a predetermined object, which indicates a direction of a predetermined next work target portion, without adding viewpoint movement related to the object in the VR content.

4. A content correction method, which is performed by an information processing device including a storage unit configured to hold 3DCG data of an object included in a content to be displayed in a two-dimensional environment, a measurement unit configured to calculate an actual size of the object based on the 3DCG data, a processing unit configured to analyze a viewpoint movement process performed during display of the content, and a generation unit configured to convert the content into a VR content, the method comprising:
arranging, by the generation unit, the 3DCG data of the object on a rotation operation table that is an object in the VR content when the actual size of the object calculated by the measurement unit is larger than a body size of a user in the content holding information in advance.

5. The content correction method according to claim 4, wherein
when the actual size of the object is larger than the body size, the generation unit of the information processing device arranges the 3DCG data of the object in the VR content on the table, and displays a predetermined object indicating a direction of a predetermined next work target portion.

6. The content correction method according to claim 4, wherein
when the actual size of the object is smaller than the body size, the generation unit of the information processing device displays a predetermined object, which indicates a direction of a predetermined next work target portion, without adding viewpoint movement related to the object in the VR content.
